# EUROPEAN PATENT APPLICATION

(11) **EP 1 865 498 A2**
(43) Date of publication of application: **12.12.2007**
(21) Application number: 07109939.4
(22) Date of filing: 08.06.2007
(51) Int. Cl.: G11B 7/0037

(54) **Temperature gain compensation system and method for disc label laser etching process**

(30) Priority: 09.06.2006 CN 200610087123
(71) Applicant: ASUSTeK Computer Inc., Peitou, Taipei City (TW)
(72) Inventor: LIAO, Kuo-Kai, TAIPEI (TW); LIU, Ching-Hwa, TAIPEI (TW)
(74) Representative: Viering, Jentschura & Partner

(57) **Abstract**

A temperature gain compensation system for disk label laser etching process contains a servo device, a Digital Signal Processor (DSP), a driver IC, and a temperature compensator. A temperature sensor in the servo device transmits a temperature signal to the temperature compensator. Then, the temperature compensator obtains a temperature difference and calculates a corresponding feedback control signal. The DSP and the driver IC process the feedback control signal to adjust the servo device.

## Description

### BACKGROUND

### Field of Invention

The present invention relates to a disc recording system and method. More particularly, the present invention relates to a temperature gain compensation system and method thereof for disc label laser etching.

### Description of Related Art

The conventional tools to label a disc are a marker, a sticker, or a printer. A new technology that utilizes specially coated recordable CD and DVD media to produce laser-etched label is present for promising slick labels with fewer hassles. This technology imparts text and graphics directly to the face of special CDs and DVDs. By pulsing the laser on and off at the appropriate time as the disc rotates, a pattern of these marks is produced. The entire label is then built by stepping the laser across the surface of the spinning disc thus forming the image in a series of packed concentric rings (tracks).

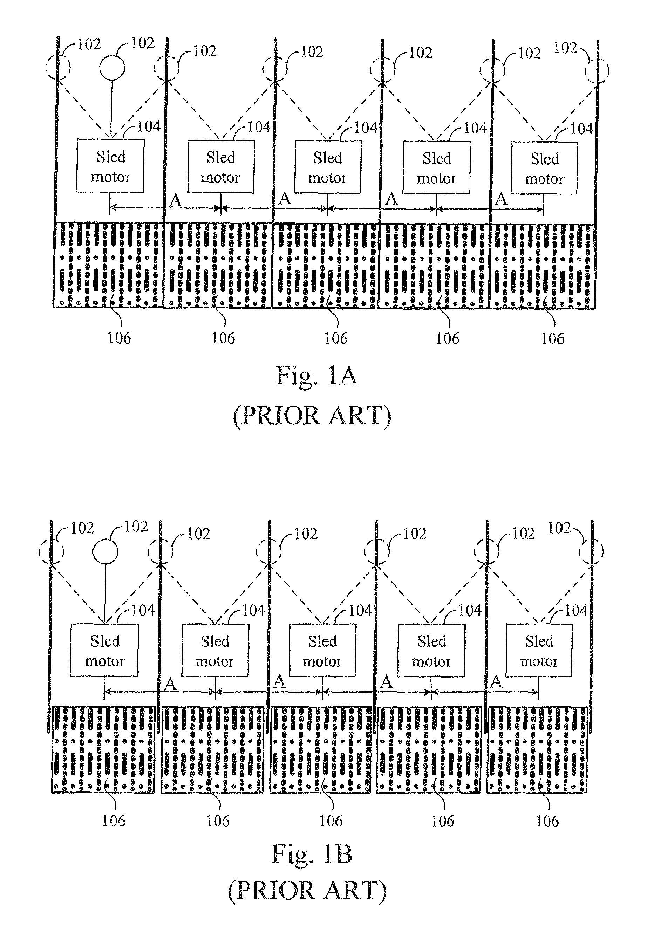

Please refer to Fig. 1A. Fig. 1 A is a schematic diagram depicting a plurality of ideal tracks in the disc label laser etching process. In Fig. 1, there is a sled motor 104, a lens 102 installed on the sled motor 104, and a plurality of tracks 106. The track distance of the plurality of tracks 106 is A. Beginning the label burning process, the sled motor 104 is moved to a predetermined position, subsequently, the lens 102 is moved in vertical and horizontal direction to focus the laser beam, then burn the track 106. After completely burning the track 106, the sled motor 104 is moved A distance and the lens 102 repeats to focus the laser beam and burn the track 106 when every track distance is A. Finally, all tracks are built by stepping the sled motor 104 to control the laser across the surface of the spinning disc.

However, there is a problem in the disc label laser etching process. Please refer to Fig. 1A and Fig. 1 B together. Fig. 1 B is a schematic diagram depicting a plurality of real tracks 106 in the disc label laser etching process. Compare and contrast the track 106 of these two figures, a gap emerges between two tracks. It is noted that the tracking coil terminal voltage controls the horizontal motion of the lens 102, and the tracking coil resistance depends on the temperature variation of the tracking coil. Unfortunately, the parameters of the laser power, burning time, and environment occurs the temperature variation of the tracking coil. Therefore, if the tracking coil terminal voltage is constant, then the horizontal motion of the lens 102 depends on the temperature variation of the tracking coil. Thus the track distances are differently and a gap emerges between two tracks in the disc label laser etching process.

In the data burning process, there is a data addressing design to ensure that the digital data is written on the correct position in the disc. The disc label laser etching process is present for promising slick labels on the face of disc, not the digital data. So that, the disc label laser etching cannot remain on the track distance and reduce the gap that emerges between two tracks by the data addressing design.

Therefore, it is desirable to reduce the gap that emerges between two tracks in the label laser etching process and improving the quality of laser-etched disc label.

### SUMMARY

It is therefore an aspect of the present invention to provide a temperature gain compensation system and method thereof to reduce the gap between two tracks in the disc label laser etching process.

In order to achieve these and other objects of the invention, a temperature gain compensation system suitable for disc label laser etching includes a servo device, a temperature compensator, and a driver IC. The servo device comprises a temperature sensor. The temperature compensator is used to dynamically receive and process a temperature signal from the temperature sensor, then obtaining a temperature difference, and calculating a feedback control signal by the temperature difference. The driver IC is electrically connected to the servo device and the temperature compensator, and used to receive and amplify the feedback control signal to control the servo device.

A temperature gain compensation method suitable for disc label laser etching process has few steps. First, it receives a temperature difference from a servo device dynamically. Then calculate a feedback control signal according to the temperature difference. Finally, adjust the servo device motion to use the feedback control signal.

It is to be understood that both the foregoing general description and the following detailed description are examples and are intended to provide further explanation of the invention as claimed.

### BRIEF DESCRIPTION OF THE DRAWINGS

These and other features, aspects, and advantages of the present invention will become better understood with regard to the following description, appended claims, and accompanying drawings where:
Fig. 1A is a schematic diagram depicting a plurality of ideal tracks in the disc label laser etching process;
Fig. 1B is a schematic diagram depicting a plurality of real tracks in the disc label laser etching process;
Fig. 2 is a schematic diagram depicting a triangular geometric relationship of the embodiment of the present invention;
Fig. 3 is a schematic diagram of the embodiment of the present invention;
Fig. 4 is a flow chart of the embodiment of the present invention;
Fig. 5 is an experimental result of the embodiment of the present invention.

### DESCRIPTION OF THE PREFERRED EMBODIMENTS

Reference is now be made in detail to the present preferred embodiments of the invention, examples of which are illustrated in the accompanying drawings. Wherever possible, the same reference numbers are used in the drawings and the description to refer to the same or like parts.

The following provides a detailed description of a temperature gain compensation system and method thereof for reducing the gap between two tracks in a label laser etching process and improving the quality of the laser-etched disc label.

It is to be understood that the horizontal moving distance of the lens is directly proportional to the tracking coil terminal voltage and is inversely proportional to the tracking coil resistance in a constant temperature situation. Therefore, the relationship between the horizontal moving distance of the lens and the tracking coil terminal voltage can be determined. Moreover, it can be surmises that the temperature depending tracking coil terminal voltage using a triangular geometric relationship. Wherein the horizontal moving distance of the lens is equal to the track distance, and the purpose is that all track distance are constant.

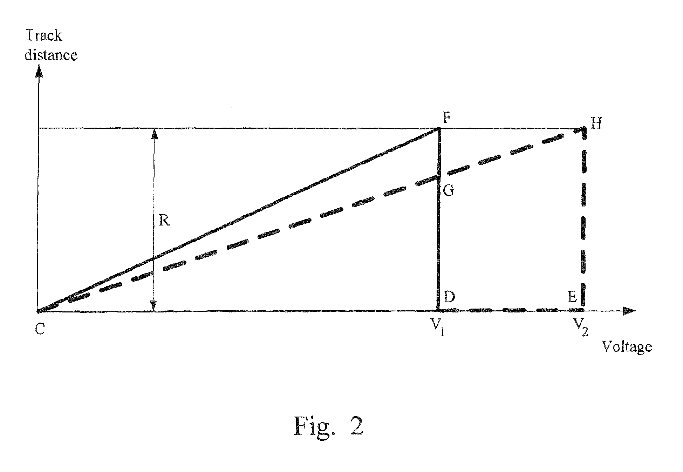

Please refer to Fig. 2. Fig. 2 is a schematic diagram depicting a triangular geometric relationship of the embodiment of the present invention. The longitudinal axis is the track distance, and the horizontal axis is the voltage in this figure. The track distance is directly proportional to the tracking coil terminal voltage when the temperature is constant. Therefore, apply a different tracking coil terminal voltage can increase or decrease the moving distance of the lens, then change the track distance. Fig. 2 presumes that a burning track distance is R, then apply an initial tracking coil terminal voltage V1 (point D) to burn the track distance R, corresponding to point F of Fig.2 in the initial track burning situation. Because the track distance is directly proportional to the track coil terminal voltage when the temperature is constant and thus the relationship between the track distance and the voltage in the initial temperature by the line CF can be determined.

However in the label laser etching process, the temperature is not constant, and the tracking coil resistance depends on the temperature variation of the tricking coil. So the track distance is reduced with the rising temperature when the tracking coil terminal voltage keeps constant. Therefore, it must compensate the tracking coil terminal voltage for the track distance change.

Now assuming that there is a higher temperature T in next track burning process, and the tracking coil terminal voltage becomes V2 (point E in Fig. 2) to remain the track distance R. V2 is named next track tracking coil terminal voltage and the next track distance is equal to the burning track distance in this embodiment. In next track burning process, the next track distance corresponds to point H. Lino CH can be used to find the variation burning track distance with the variation track tracking coil terminal voltage in higher temperature T. In addition, line FD and line CH intersect at point G. The line GD corresponded to the tack distance that the tracking coil terminal voltage is V1 when the temperature T is higher. In other words, the line FG that is the gap value difference between the initial track distance and the next track distance.

Therefore, the purpose is to find the next track tracking coil terminal voltage. By a triangular geometric relationship between triangle CFD and CHE, it can be found the next track tracking coil terminal voltage. In Fig. 2, it is to be understood that the burning track distance (line HE) over a difference value (line GD) is equal to a ratio of a next track tracking coil terminal voltage V2 (line CE) to an initial tracking coil terminal voltage V1 (line CD). Wherein the difference value is the burning track distance R (line FD) subtract the gap value (line FG) when the next track is equal to the burning track. Furthermore, the gap value is directly proportional to the temperature coefficient of the tracking coil resistor, the track distance, and a temperature difference.

To find the next track tracking terminal voltage in the specific temperature, just obtain the track distance, the initial temperature of the track burning process, the initial tracking coil terminal voltage, and the temperature coefficient of the tracking coil resistor from the optical read/write head module specification. Then using the triangular geometric relationship is described above to acquire the next track tracking terminal voltage. Therefore a temperature compensator can dynamically receive and process a temperature signal from a temperature sensor to obtain a temperature difference, and calculate a feedback control signal by the temperature difference to compensate the terminal voltage for remaining the track distance.

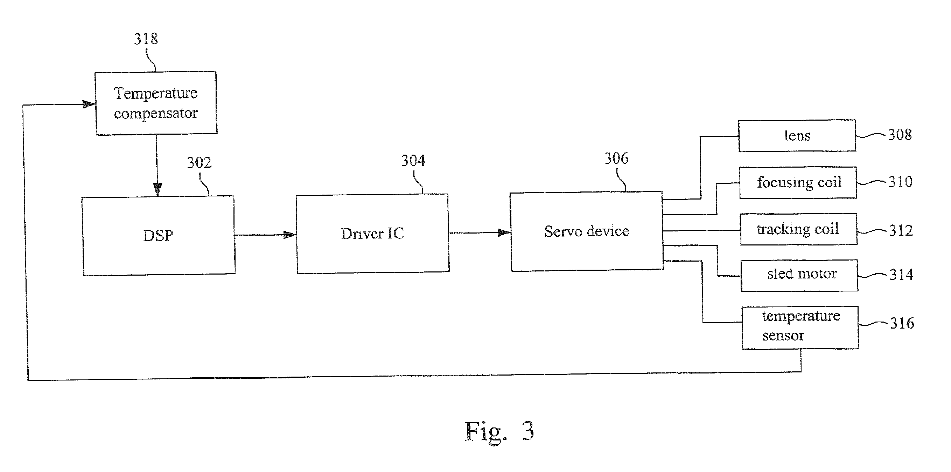

Please refer to Fig 3. Fig. 3 is a schematic diagram of the embodiment of the temperature gain compensation system for the disk laser etching process of the present invention. The system contains a DSP (Digital signal Processing) 302, a driver IC 304, a temperature compensator 318, and a servo device 306. The servo device 306 contains a temperature sensor 316. The DSP 302 is used for processing a burning signal and transforming the burning signal to a driving signal. The driver IC 304 is used to receive and amplify the driving signal to control the servo device 306. The temperature compensator 318 is used to dynamically receive and process a temperature signal from the temperature sensor 316 to obtain a temperature difference, and calculating a feedback control signal by the temperature difference. Moreover, the feedback control signal is transmitted to the driver IC 304 and is amplified by the driver IC 304 to adjust the servo device 306.

The servo device 306 in this embodiment is an optical read/write head module and contains a lens 308, a focusing coil 310, a tracking coil 312, a sled motor 314, and the temperature sensor 316. The focusing coil 310 and the tracking coil 312 are used to control the lens 308 to move in the vertical and horizontal direction to focus the laser beam and burn a track. The lens 308 is mounted on the sled motor 314. Therefore, the sled motor 314 is used to move the lens 308 to a predetermined position. The temperature sensor 316 is use to transmit the temperature signal of the optical read/write head module to the temperature compensator 313.

In this embodiment, the burning signal is a disc label laser etching signal, and the temperature compensator can be realized in a semiconductor chip. In other embodiments the system could further comprise a nonvolatile storage module and the temperature compensator can be realized in a firmware stored in the nonvolatile storage module. Furthermore, the temperature compensator can be integrated into the DSP and executed by the DSP.

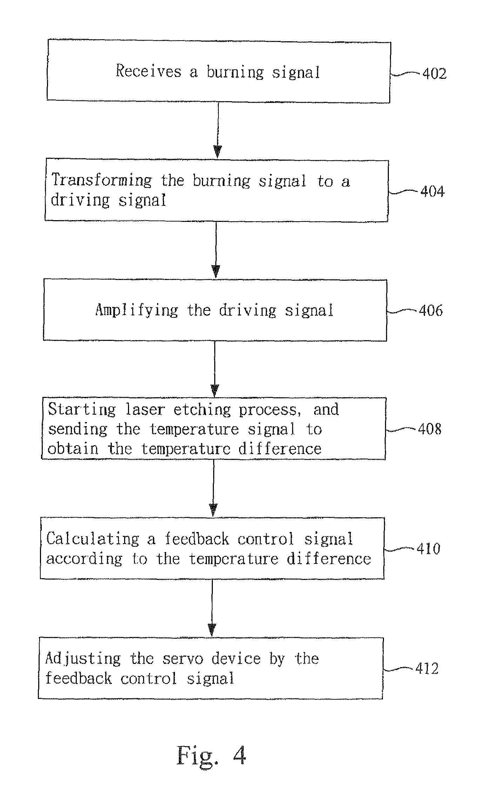

To describe the whole temperature gain compensative control method for disc label laser etching in detail, please refer to Fig. 3 and Fig. 4 together. Fig. 4 is a flow chart of the embodiment of the present invention. In step 402, the DSP 302 receives a burning signal. Then in step 404, the DSP 302 processes and transforms the burning signal into a driving signal and transmits the driving signal to the driver IC 304. Subsequently, step 406 describes that the driver IC 304 receives and amplifies the driving signal to control the servo device 306. In step 408, after receiving the driving signal from the driver IC 304, the servo device 306 is starting the laser etching process, and the temperature sensor 316 of the servo device 306 is sending the temperature signal to the temperature compensator 318 dynamically. Then, the temperature compensator 318 obtains the temperature difference between the temperature signal and the initial temperature. In Step 410, the temperature compensator 318 calculates a feedback control signal according to the temperature difference by the triangular geometric relationship described above. Finally, step 412, the feedback control signal is transmitted to the DSP 302. After the same process of the burning signal, the feedback control signal is used to adjust the servo device 306.

The feedback control signal comprises a tracking coil terminal voltage value to adjust the lens motion of the servo device. Therefore, the tracking coil terminal voltage value compensates the tracking coil resistance which changes with the temperature and remains the constant track distance.

In view of the foregoing, step 408 describes that the temperature sensor 316 transmits a temperature signal to the temperature compensator 318 dynamically, and the temperature compensator compares the initial temperature with the temperature signal to obtain the temperature difference. Subsequently, step 410 describes that the temperature compensator 318 calculates the feedback control signal using the triangular geometric relationship that is described above. The feedback control signal contains the terminal voltage value of the tracking coil 312. After being processed and amplified by the DSP 302 and driver IC 304, the voltage value has become the tracking coil terminal voltage to compensate the tracking coil resistance changed with temperature.

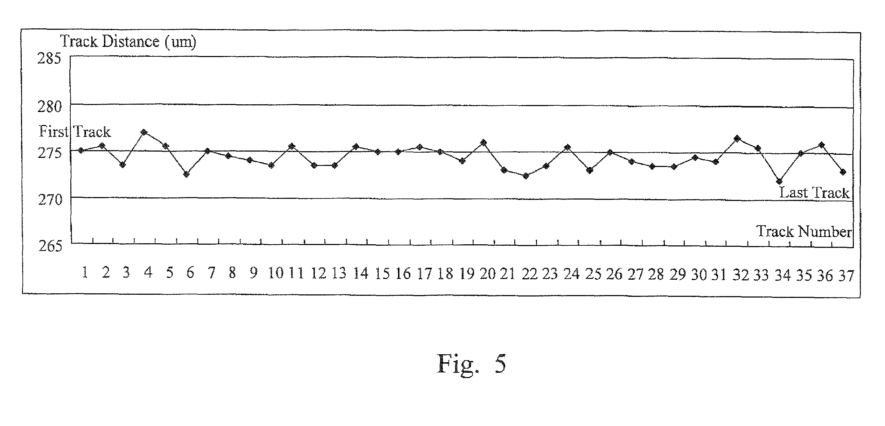

To know the impact on the embodiment of this invention, please refer to Fig. 5. Fig. 5 is an experimental result of the embodiment of the present invention. In this experiment, the label laser etching process with temperature gain compensation system of this embodiment burns 37 tracks. The longitudinal axis is the track distance, and the horizontal axis is the track number. Every burning track is set as 275 micrometers. Observing the experiment result, all track distances are 275 micrometers or thereabouts. Every variation of the track distance is less than 5 micrometers. According this experimental result, it is understood that the temperature gain compensation system for disc label laser etching process can keep the track distance in constant effectively.

As described above, the temperature compensator receives the temperature signal from the temperature sensor dynamically and generates a feedback control signal. The feedback control signal can adjust the tracking coil terminal voltage. Thus, it can reduce the gap between two tracks in the disc label laser etching process and improves the quality of the laser-etched disc label.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A temperature gain compensation system for disk label laser etching, the improvement comprising:
a servo device, comprises a temperature sensor;
a temperature compensator, capable of dynamic receiving and processing a temperature signal from the temperature sensor to obtain a temperature difference, and calculating a feedback control signal by the temperature difference; and
a driver IC electrically, connected to the servo device and the temperature compensator, and capable of receiving and amplifying the feedback control signal to adjust the servo device.

2. The temperature gain compensation system of claim 1, wherein the servo device is an optical read/write head module.

3. The temperature gain compensation system of claim 1, wherein the temperature compensator is obtained through a triangular geometric relationship to calculate the feedback control signal, the triangular geometric relationship is a difference value divided by a burning track distance, and the triangular geometric relationship is equal to a ratio of an initial track tracking coil terminal voltage to a next track tracking coil terminal voltage, wherein the difference value is the burning track distance subtracted by a gap value calculated by the temperature difference, when the next track is equal to the burning track.

4. The temperature gain compensation system of claim 1, wherein the temperature compensator can be realized in a semiconductor chip.

5. The temperature gain compensation system of claim 1, wherein the system further comprises a nonvolatile storage module.

6. The temperature gain compensation system of claim 5, wherein the temperature compensator can be realized in a firmware stored in the nonvolatile storage module.

7. The temperature gain compensation system of claim 5, wherein the temperature compensator can be integrated into a Digital signal Processing and executed by the Digital signal Processing.

8. A temperature gain compensation method for disk label laser etching, the improvement comprising:
obtaining a temperature difference of a servo device dynamically;
calculating a feedback control signal according to the temperature difference;
adjusting the servo device motion by the feedback control signal.

9. The temperature gain compensation method of claim 8, wherein calculating a feedback control signal is obtained by a triangular geometric relationship, the triangular geometric relationship is a difference value divided by a burning track distance, and the triangular geometric relationship is equal to a ratio of an initial track tracking coil terminal voltage to a next track tracking coil terminal voltage, wherein the difference value is the burning track distance subtracted by a gap value calculated by the temperature difference, when the next track is equal to the burning track.

10. The temperature gain compensation method of claim 9, wherein the gap value is directly proportional to the temperature difference, a tricking coil temperature coefficient, and the burning track distance.

11. The temperature gain compensation method of claim 8, wherein the servo device is an optical read/write head module.

12. The temperature gain compensation method of claim 8, wherein the feedback control signal comprises a tracking coil terminal voltage value.
